# EUROPEAN PATENT APPLICATION

(11) **EP 3 214 800 A1**
(43) Date of publication of application: **06.09.2017**
(21) Application number: 15866301.3
(22) Date of filing: 25.09.2015
(51) Int. Cl.: H04L 12/24, H04L 12/703

(54) **METHOD AND DEVICE FOR IMPLEMENTING CAPACITY PLANNING**

(30) Priority: 05.12.2014 CN 201410735348
(71) Applicant: ZTE Corporation, Shenzhen city, Guangdong 518057 (CN)
(72) Inventor: LU, Chunhuai, Shenzhen Guangdong 518057 (CN); WANG, Jiayu, Shenzhen Guangdong 518057 (CN); QIAN, Jia, Shenzhen Guangdong 518057 (CN); XIONG, Quan, Shenzhen Guangdong 518057 (CN)
(74) Representative: Savi, Massimiliano
(86) International application number: PCT/CN2015/090731
(87) International publication number: WO 2016/086709

(57) **Abstract**

A method and device for implementing capacity planning are provided. The method includes: acquiring a current network topology and service information; increasing the number of links between every two nodes in the acquired network topology to a preset maximum number; traversing all link fault combinations in a network, for each of the link fault combinations, calculating services affected by the link fault combination according to the acquired service information, and searching for a restoration route for each of the calculated affected services; and after deleting all added and unused links in the network topology, acquiring a capacity planning result based on a network topology after deleting. Through the scheme of embodiments of the present invention, after the number of links between every two nodes in the network topology is increased to the preset maximum number, capacity planning is performed, thereby improving the success rate of the capacity planning.

## Description

### Technical Field

The present invention relates to software-defined network (SDN) technology, and more particularly to a method and device for implementing capacity planning.

### Background

The SDN, which is a new type of network innovation architecture proposed by Clean Slate Program of Stanford University USA, implements flexible control for network traffics by separating a control plane from a data plane in a network device, to provide a good platform for innovation of core networks and applications.

Software Defined Optical Network (SDON) applies the SDN architecture to an Optical Transport Network (OTN) to improve the end-to-end networking capabilities and service innovation capabilities of the OTN.

Intelligent optical network is an optical transport network where dynamic switching and intelligent control are introduced by using a Generalized Multiprotocol Label Switching (GMPLS) protocol control plane. A major feature of an Automatically Switched Optical Network (ASON) is avoidance of service interruption by dynamic restoration in the case of network fault. At present, more and more operators require to plan the ASON resistant to multiple link faults, to ensure that all services will not be interrupted in a scenario of any link fault. The software definition optical network inherits characteristics of dynamic restoration of services in the ASON, and however how to plan the network capacity for service restoration to ensure the reliability of the services is also a problem to be solved urgently.

Capacity planning for the ASON is generally implemented by a separated network planning tool, and a user inputs manually network topology and service information or imports network topology and service information through a configuration file, and the capacity planning for the ASON does not integrated with the existing network architecture well. There are mainly several existing capacity planning methods as follows.

The first one is to reserve link capacity, set a usage threshold for each link, and reserve a portion of the capacity for a restoration route. The usage threshold, which is an artificial empirical value, cannot guarantee that the network meet requirements of anti-multiple link interruptions.

The second one is to pre-configure multiple routes for the services, and make links between each route meet separation characteristics. The network capacity calculated by this method is relatively large, but the characteristic of restoration route capacity sharing is not utilized.

The third one is to set capacity of each link to be the maximum bandwidth value, and then decrease the link bandwidth and perform anti-multiple link interruption simulation, and use a minimum bandwidth value, by which each link can pass anti-multiple link interruption simulation, as the minimum network capacity. This method requires repeated fault simulations, thus its efficiency is very low.

The fourth one is to, when the services fail to find the restoration route, add the service capacity required by routing failure on a link with the minimum link, and then re-perform anti-multiple link interruption simulation till the simulation is passed. What is calculated by this method is not the minimum capacity of the network, and there is also a problem that repeated simulations are required and the efficiency is very low.

In the four methods described above, since the maximum limitation of the capacity of the link is not considered when the capacity planning is performed, it is possible that the existing link cannot satisfy the service restoration even if the capacity is planned to the maximum capacity. Therefore, the success rate of the capacity planning is low.

### Summary

To solve the above problem, embodiments of the present invention propose a method and device for implementing capacity planning to improve the success rate of capacity planning.

To achieve the abovementioned object, an embodiment of the present invention provides a method for implementing capacity planning, including:
acquiring a current network topology and service information;
increasing a number of links between every two nodes in the acquired network topology to a preset maximum number;
traversing all link fault combinations in a network, for each of the all link fault combinations, calculating services affected by the link fault combination according to the acquired service information, and searching for a restoration route for each of the calculated affected services; and
after deleting all added and unused links in the network topology, acquiring a capacity planning result based on a network topology after deleting.

In an exemplary embodiment, searching for a restoration route for each of the calculated affected services includes:
pre-initializing node information of all nodes in the network topology;
setting a source node of the service as a current node, and setting a routing state of the source node to be that an optimal route from the source node to the node has been found;
acquiring all links associated with the current node;
for each of the acquired links, setting the other end node of two end nodes of the link rather than a current node as a next node, determining that a routing state of the next node is that an optimal route from the source node to the node has been found, and setting the other end node of two end nodes of an unprocessed link rather than a current node as a next node till all the acquired links are processed completely; and
searching for a node with a minimum weight of nodes with a routing state that a route from the source node to the node has been found but is not determined to be optimal, in all the nodes in the network topology, and determining that the searched node is a sink node of a service, and forming a restoration route of the service from the sink node of the service back to the sourcing node of the service.

In an exemplary embodiment, when determining that a routing state of the next node is not that the optimal route from the source node to the node has been found, searching for a restoration route for each of the calculated affected services further includes:
determining that remaining capacity of the link is greater than or equal to capacity required by the service, and calculating a weight of the next node;
determining that the calculated weight is less than a weight of the next node and the weight of the next node is greater than 0, or the weight of the next node is equal to 0, updating the weight of the next node to be the calculated weight, setting a previous node of the next node as a current node, and setting the routing state of the next node to be that a route from the source node to the node has been fond but is not determined to be optimal; and
continuing to perform the step of setting the other end node of two end nodes of an unprocessed link rather than a current node as a next node.

In an exemplary embodiment, when determining that the remaining capacity of the link is less than the capacity required by the service, searching for a restoration route for each of the calculated affected services further includes:
determining that capacity of the link is greater than or equal to a preset maximum capacity, and continuing to perform the step of setting the other end node of two end nodes of an unprocessed link rather than a current node as a next node.

In an exemplary embodiment, when determining that the capacity of the link is less than the preset maximum capacity, searching for a restoration route for each of the calculated affected services further includes:
expanding the capacity of the link such that the expanded capacity of the link is less than or equal to the preset maximum capacity, and performing a step of determining whether the remaining capacity of the link is greater than or equal to the capacity required by the service.

In an exemplary embodiment, when determining that the searched node is not the sink node of the service, searching for a restoration route for each of the calculated affected services further includes:
setting the searched node as a current node, and continuing to perform the step of acquiring all the links associated with the current node.

An embodiment of the present invention further provides a device for implementing capacity planning, including at least an acquisition module, a planning module and an output module.

The acquisition module is configured to acquire a current network topology and service information.

The planning module is configured to increase a number of links between every two nodes in the acquired network topology to a preset maximum number; traverse all link fault combinations in a network, and for each of the link fault combinations, calculate services affected by the link fault combination according to the acquired service information, and search for a restoration route for each of the calculated affected services.

The output module is configured to, after all added and unused links in the network topology are deleted, acquire a capacity planning result based on a network topology after deleting.

In an exemplary embodiment, the planning module is configured to,
increase the number of links between every two nodes in the acquired network topology to the preset maximum number; traverse all link fault combinations in the network, and for each of the link fault combinations, calculate the services affected by the link fault combination according to the acquired service information;
for each of the services affected by the link fault combination, pre-initialize node information of all nodes in the network topology;
set a source node of the service as a current node and set a routing state of the source node to be that an optimal route from the source node to the node has been found;
acquire all links associated with the current node;
for each of the acquired links, set the other end node of two end nodes of the link rather than a current node as a next node, determine that a routing state of the next node is that an optimal route from the source node to the node has been found, and set the other end node of two end nodes of an unprocessed link rather than a current node as a next node till all the acquired links are processed completely; and
search for a node with the minimum weight nodes with a routing state that a route from the source node to the node has been found but is not determined to be optimal, in all the nodes of the network topology, and determine that the searched node is a sink node of the service, and form a restoration route of the service from the sink node of the service back to the sourcing node of the service.

In an exemplary embodiment, the planning module is configured to,
when determining that the routing state of the next node is not that the optimal route from the source node to the node has been found, determine that remaining capacity of the link is greater than or equal to the capacity required by the service and calculate a weight of the next node;
when the calculated weight is less than a weight of the next node and the weight of the next node is greater than 0, or the weight of the next node is equal to 0, update the weight of the next node to be the calculated weight, set a previous node of the next node as a current node, and set a routing state of the next node to be that the route from the source node to the node has been fond but is not determined to be optimal; and
continue to perform the step of setting the other end node of two end nodes of the unprocessed link rather than a current node as a next node.

In an exemplary embodiment, the planning module is further configured to,
when the remaining capacity of the link is less than the capacity required by the service, determine that the capacity of the link is greater than or equal to a preset maximum capacity, and continue to perform the step of setting the other end node of two end nodes of an unprocessed link rather than a current node as a next node.

In an exemplary embodiment, the planning module is further configured to,
when the capacity of the link is less than the preset maximum capacity, expand the capacity of the link such that the expanded capacity of the link is less than or equal to the preset maximum capacity and perform a step of determining whether the remaining capacity of the link is greater than or equal to the capacity required by the service.

In an exemplary embodiment, the planning module is further configured to,
When the searched node is not the sink node of the service, set the searched node as a current node, and continue to perform the step of acquiring all the links associated with the current node.

Compared with the existing art, an embodiment of the present invention includes: acquiring a current network topology and service information; increasing the number of links between every two nodes in the acquired network topology to a preset maximum number; traversing all link fault combinations in a network, and for each of the link fault combinations, calculating services affected by the link fault combination according to the acquired service information, and searching for a restoration route for each of the calculated affected services; and after all added and unused links in the network topology are deleted, acquiring a capacity planning result based on a network topology after deleting. Through the scheme of the embodiment of the present invention, after the number of links between every two nodes in the network topology is increased to the preset maximum number, capacity planning is performed, thereby improving the success rate of the capacity planning.

In an exemplary embodiment, the capacity of the link is dynamically expanded according to service requirements during searching for the restoration route, thus the efficiency of a method for searching for the restoration route is improved, and the capacity planning result is further optimized.

In an exemplary embodiment, a weight of a newly-added link is set to be larger than a weight of the link in the original network topology during searching for the restoration route, such that the restoration routing of the service does not pass through the newly added link to the greatest extent, thereby meeting requirements of anti-multiple link interruptions with less network capacity, and reducing network costs.

### Brief Description of the Drawings

The accompanying drawings in embodiments of the present invention will be described below, and are intended to provide a further understanding of embodiments of the present invention and explain embodiments of the present invention together with the specification, but do not constitute a limitation to the protection scope of the embodiments of the present invention.
FIG. 1 is a flow chart of a method for implementing capacity planning in accordance with an embodiment of the present invention.
FIG. 2 is a flow chart of a method for searching for a restoration route in accordance with an embodiment of the present invention.
FIG. 3 is a structural block diagram of a device for implementing capacity planning in accordance with an embodiment of the present invention.
FIG. 4 is a schematic diagram of a network topology structure before planning in accordance with an embodiment of the present document.
FIG. 5 is a schematic diagram of a service topology structure before planning in accordance with an embodiment of the present document.
FIG. 6 is a schematic diagram of a network topology structure after links are added in accordance with an embodiment of the present document.
FIG. 7 is a flow chart of an embodiment for a method for searching for a restoration route in accordance with an embodiment of the present invention.
FIG.8 is a schematic diagram of a software defined optical network structure in accordance with an embodiment of the present invention.
FIG. 9 is a structural block diagram of an embodiment for a device for implementing capacity planning in accordance with an embodiment of the present invention.

### Detailed Description

To understand the present invention easily for those skilled in the art, embodiments of the present invention will be described in detail in conjunction with the accompanying drawings, which are not intended to limit the protection scope of the embodiments of the present invention. It should be noted that the embodiments in the present application and various manners in the embodiments can be combined with each other without conflict.

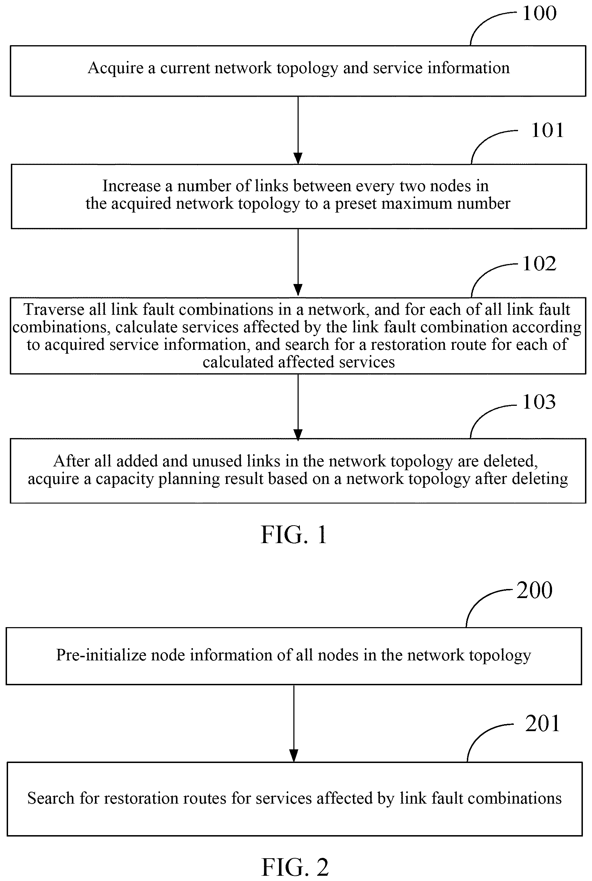

Referring to FIG. 1, an embodiment of the present invention proposes a method for implementing capacity planning, including the following steps 100-103.

In step 100, a current network topology and service information are acquired.

In this step, the network topology may be a name of a node in a network, a connection relationship between nodes in a network, remaining capacity of a link between the nodes in a network, etc.

In this step, the service information may be a name of a node through which a service passes, a link through which a service passes, the required capacity required by the service, etc.

In step 101, a number of links between every two nodes in the acquired network topology is increased to a preset maximum number.

In step 102, all link fault combinations in the network are traversed, and for each of the link fault combinations, services affected by the link fault combination are calculated according to the acquired service information, and a restoration route is searched for each of the calculated affected services.

In this step, the link fault combination refers to a link fault combination of anti-N link interruptions. For example, in the case of anti-3 link interruptions, the link fault combination refers to any three links (that is, faulty links) in the network topology.

In this step, capacity of the nodes or links may be increased when a restoration route is searched for each of the affected services, but the capacity of the links after the capacity is added should be less than or equal to the maximum capacity of the links.

In this step, that a restoration route is searched for each of the calculated affected services includes:
pre-initializing node information of all nodes in the network topology; setting a source node of the service as a current node and setting a routing state of the source node to be that an optimal route from the source node to the node has been found; acquiring all links associated with the current node; for each of the acquired links, setting the other end node of two end nodes of the link rather than the current node as a next node; determining that a routing state of the next node is that the optimal route from the source node to the node has been found, and setting the other end node of two end nodes of an unprocessed link rather than the current node as a next node till all the acquired links are processed completely; and searching for a node with the minimum weight of nodes with a routing state that the route from the source node to the node has been found but is not determined to be optimal, in all the nodes of the network topology, and determining that the searched node is a sink node of the service, and forming the restoration route of the service from the sink node of the service back to the sourcing node of the service.

When it is determined that the routing state of the next node is not that the optimal route from the source node to the node has been found, that the remaining capacity of the link is greater than or equal to the capacity required by the service is determined, and a weight of the next node is calculated. It is determined that the calculated weight is less than a weight of the next node and the weight of the next node is greater than 0, or the weight of the next node is equal to 0, the weight of the next node is updated to be the calculated weight, and a previous node of the next node is set as the current node, and the routing state of the next node is set to be that the route from the source node to the node has been fond but is not determined to be optimal; and the step of setting the other end node of two end nodes of the unprocessed link rather than the current node as a next node continues to be performed.

When it is determined that the remaining capacity of the link is less than the capacity required by the service, that the capacity of the link is greater than or equal to the preset maximum capacity is determined, and the step of setting the other end node of two end nodes of the unprocessed link rather than the current node as a next node continues to be performed.

When a node with the route state that the route from the source node to the node has been found but is not determined to be optimal does not be searched for in all the nodes of the network topology, the process ends, and a reason for failure is illustrated.

When it is determined that the capacity of the link is less than a preset maximum capacity, the capacity of the link is expanded such that the expanded capacity of the link is less than or equal to the preset maximum capacity, and a step of determining whether the remaining capacity of the link is greater than or equal to the capacity required by the service is performed.

When it is determined that the searched node is not the sink node of the service, the searched node is set as the current node, and the step of acquiring all links associated with the current node continues to be performed.

In step 103, after all added and unused links in the network topology are deleted, a capacity planning result is acquired based on a network topology after deleting.

In this step, the capacity planning result mainly includes a node planning result and a link planning result. The node planning result at least includes the added capacity required to restore the service in the event of a fault. The link planning result at least includes the added links and capacity required to restore the service in the event of a fault.

The node planning result may also include the number of service uplink and downlink ports of the node, the number of link ports connected to other nodes, and cross-capacity. The link planning result may also include a source node, a sink node and total capacity of the link.

Referring to FIG. 2, an embodiment of the present invention further provides a method for searching for a restoration route, including the following steps 200-201.

In step 200, node information of all the nodes in the network topology is pre-initialized.

This step includes: routing states of all nodes in the network topology are set to be that a route from the source node to the node has not been found, and a weight of the route from other nodes to the source node in the topology network is set to be 0, and a previous node is empty, and a link from the previous node to the node is empty.

In step 201, restoration routes for services affected by link fault combinations are searched for. The step includes:
setting a source node of the service as the current node, and setting a routing state of the source node to be that an optimal route from the source node to the node has been found; acquiring all links associated with the current node; for each of the acquired links, setting the other end node of two end nodes of the link rather than the current node as a next node; determining that a routing state of the next node is that the optimal route from the source node to the node has been found, and setting the other end node of two end nodes of an unprocessed link rather than the current node as the next node till all the acquired links are processed completely; and searching for a node with the minimum weight of nodes with a routing state that the route from the source node to the node has been found but is not determined to be optimal, in all the nodes of the network topology, and determining that the searched node is a sink node of the service, and forming the restoration route of the service from the sink node of the service back to the sourcing node of the service.

When it is determined that the routing state of the next node is not that the optimal route from the source node to the node has been found, that the remaining capacity of the link is greater than or equal to the capacity required by the service is determined, and a weight of the next node is calculated. It is determined that the calculated weight is less than a weight of the next node and the weight of the next node is greater than 0, or the weight of the next node is equal to 0, and the weight of the next node is updated to be the calculated weight, and a previous node of the next node is set as the current node, and the routing state of the next node is set to be that the route from the source node to the node has been fond but is not determined to optimal; and the step of setting the other end node of two end nodes of the unprocessed link rather than the current node as the next node continues to be performed.

When it is determined that the remaining capacity of the link is less than the capacity required by the service, that the capacity of the link is greater than or equal to the preset maximum capacity is determined, and the step of setting the other end node of two end nodes of an unprocessed link rather than the current node as the next node continues to be performed.

When it is determined that the capacity of the link is less than a preset maximum capacity, the capacity of the link is expanded such that the expanded capacity of the link is less than or equal to the preset maximum capacity, and a step of determining whether the remaining capacity of the link is greater than or equal to the capacity required by the service is performed.

When a node with the route state that the route from the source node to the node has been found but is not determined to be optimal does not be searched for in all nodes of the network topology, the process ends, and a reason for failure is illustrated.

When it is determined that the searched node is not the sink node of the service, the searched node is set as the current node, and the step of acquiring all the links associated with the current node continues to be performed.

The weight of the next node is a sum of a weight of the current node and a weight of the link. The weight of the link may be determined based on an actual planning objective, and may be one or more of a number of hops, distance, cost and load and so on. If the link is an added link and is not used, the weight of the link is multiplied by a factor such as 10. In the case of cost planning, the weight of the next node may be considered to be added by the added device cost at two ends of the link.

When there are multiple weights of the link, the weight of the node should be calculated separately. For example, if the weights of the link include the number of hops and a distance, then weights corresponding to the number of hops and a weight corresponding to the distance should be calculated respectively. Then, a node with the minimum weight should be searched based on comparison of priority levels. For example, when the weight of the node includes the number of hops and the distance, if the priority level of the number of hops is higher than that of the distance, a node with the minimum number of hops is searched for in nodes with a routing state that the route from the source node to the node has been found but is not determined to be optimal. When there are multiple searched nodes with the minimum number of hops, a searched node with the shortest distance is searched for in the nodes with the minimum number of hops.

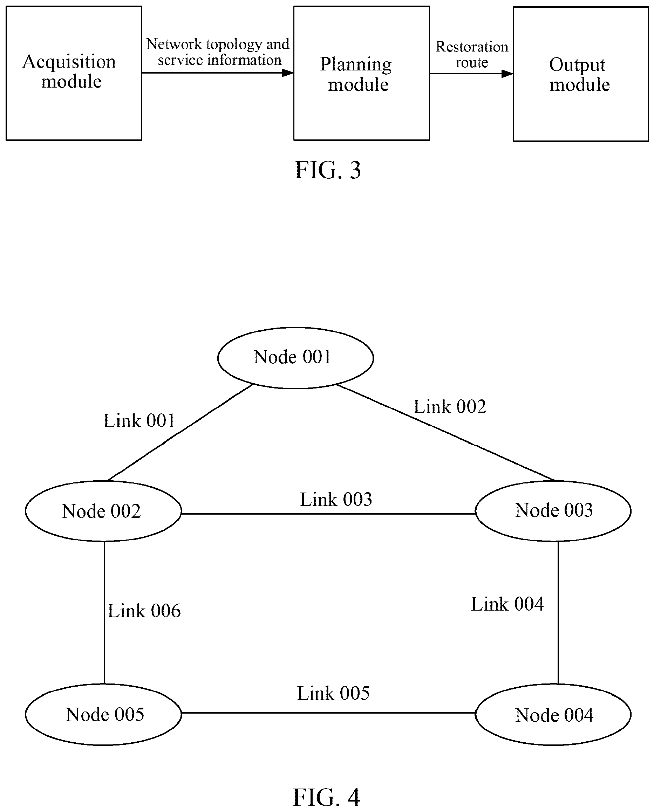

Referring to FIG. 3, an embodiment of the present invention further provides a device for implementing capacity planning, including at least an acquisition module, a planning module and an output module.

The acquisition module is configured to acquire a current network topology and service information.

The planning module is configured to increase the number of links between every two nodes in the acquired network topology to a preset maximum number, traverse all link fault combinations in a network, and for each of all link fault combinations, calculate services affected by the link fault combination according to the acquired service information, and search for a restoration route for each of the calculated affected services.

The output module is configured to, after all added and unused links in the network topology are deleted, acquire a capacity planning result based on a network topology after deleting.

In the device according to an embodiment of the present invention, the planning module is configured to,
increase the number of links between every two nodes in the acquired network topology to a preset maximum number; traverse all link fault combinations in the network, and for each of the link fault combination, calculate the services affected by the link fault combination according to the acquired service information;
for each of the services affected by the link fault combination, pre-initialize node information of all nodes in the network topology;
set a source node of the service as the current node, and set a routing state of the source node to be that an optimal route from the source node to the node has been found;
acquire all links associated with the current node;
for each of the acquired links, set the other end node of two end nodes of the link rather than the current node as a next node; determine that a routing state of the next node is that the optimal route from the source node to the node has been found, and set the other end node of two end nodes of an unprocessed link rather than the current node as the next node till all the acquired links are processed completely; and
search for a node with the minimum weight of nodes with a routing state that the route from the source node to the node has been found but is not determined to be optimal, in all the nodes of the network topology, and determine that the searched node is a sink node of the service, and form the restoration route of the service from the sink node of the service back to the sourcing node of the service.

In the device according to an embodiment of the present invention, the planning module is further configured to,
when it is determined that the routing state of the next node is not that the optimal route from the source node to the node has been found, determine that the remaining capacity of the link is greater than or equal to the capacity required by the service, and calculate a weight of the next node;
when it is determined that the calculated weight is less than a weight of the next node and the weight of the next node is greater than 0, or the weight of the next node is equal to 0, update the weight of the next node to be the calculated weight, and set a previous node of the next node as the current node, and set the routing state of the next node to be that the route from the source node to the node has been fond but is not the optimal; and
continue to perform the step of setting the other end node of two end nodes of the unprocessed link rather than the current node as the next node.

In the device according to the embodiment of the present invention, the planning module is further configured to,
when it is determined that remaining capacity of the link is less than the capacity required by the service, determine that the capacity of the link is greater than or equal to the preset maximum capacity, and continue to perform the step of setting the other end node of two end nodes of the unprocessed link rather than the current node as the next node.

In the device according to the embodiment of the present invention, the planning module is further configured to,
When it is determined that the searched node is not the sink node of the service, set the searched node as the current node and continue to perform the step of acquiring all the links associated with the current node.

The method of the present invention will be described in detail hereinafter through examples.

In the first example, FIG. 4 is a schematic diagram of a network topology structure before planning. As shown in FIG. 4, the maximum link capacity of links is set to be 10G, and the maximum number of the links between two nodes is 5.

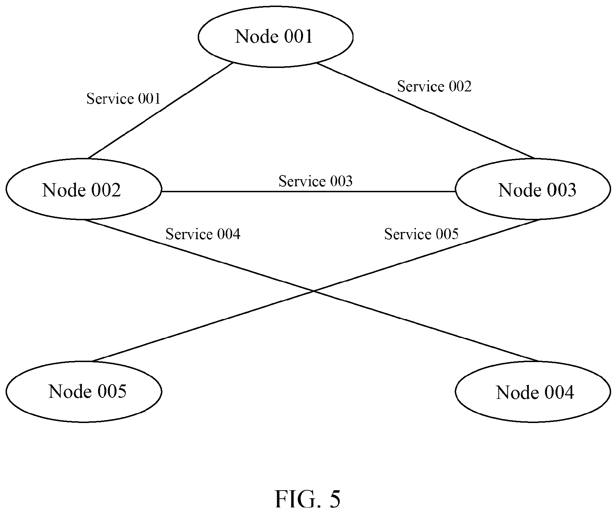

FIG. 5 is a schematic diagram of a service topology before planning. As shown in FIG. 5, services from service 001 to service 005 are all services of unprotected and dynamically restorable Oracle Database Unloaders (ODUs) 1.

Table 1 is a service routing information table.

**Table 1**

| Service name | Source node | Sink node | Route |
|---|---|---|---|
| Service 001 | Node 001 | Node 002 | Link 001 |
| Service 002 | Node 001 | Node 003 | Link 002 |
| Service 003 | Node 002 | Node 003 | Link 003 |
| Service 004 | Node 002 | Node 004 | Link 006-> link 005 |
| Service 005 | Node 003 | Node 005 | Link 004-> link |
| | | | 005 |

Table 2 is a link information table before planning. As shown in Table 2, the link information before planning is calculated based on the network topology and service routing.

**Table 2**

| Link name | Capacity | Utilization rate |
|---|---|---|
| Link 001 | 2.5G | 1 |
| Link 002 | 2.5G | 1 |
| Link 003 | 2.5G | 1 |
| Link 004 | 2.5G | 1 |
| Link 005 | 10G | 0.5 |
| Link 006 | 2.5G | 1 |

Table 3 is a node information table before planning. As shown in Table 3, the node information before planning is calculated based on the network topology and service routing. Herein, a cross-capacity of a node is a product of a cross-granularity and the number of cross-units.

**Table 3**

| Node name | Node cross-capacity | | Total number of ports | Port usage information | |
|---|---|---|---|---|---|
| | Cross-granul arity | Number of cross-uni ts | | Port rate | Number of ports |
| Node 001 | ODUO | 8 | 4 | ODU1 | 4 |
| Node 002 | ODUO | 12 | 6 | ODU1 | 6 |
| Node 003 | ODUO | 16 | 6 | ODU1 | 6 |
| Node 004 | ODUO | 4 | 3 | ODU1 | 2 |
| | | | | ODU2 | 1 |
| Node 005 | ODUO | 8 | 3 | ODU1 | 2 |
| | | | | ODU2 | 1 |

The capacity planning of the anti-two link interruptions is performed by using the method according to an embodiment of the present invention, to acquire the following planning result.

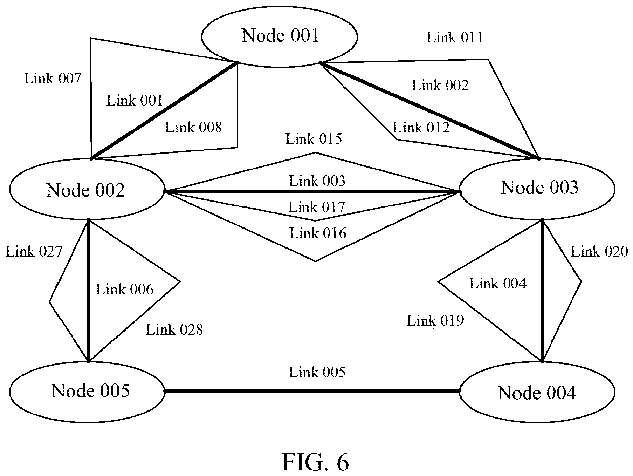

Table 4 illustrates link information after planning, and a link with the utilization rate of 0 is required to be added. FIG. 6 is a schematic diagram of a network topology after links are added.

**Table 4**

| Link name | First node | End node | Capacity | Utilization rate |
|---|---|---|---|---|
| Link 001 | Node 001 | Node 002 | 10G | 0.25 |
| Link 007 | Node 001 | Node 002 | 10G | 0 |
| Link 008 | Node 001 | Node 002 | 10G | 0 |
| Link 002 | Node 001 | Node 003 | 10G | 0.25 |
| Link 011 | Node 001 | Node 003 | 10G | 0 |
| Link 012 | Node 001 | Node 003 | 10G | 0 |
| Link 003 | Node 002 | Node 003 | 10G | 0.25 |
| Link 015 | Node 002 | Node 003 | 10G | 0 |
| Link 016 | Node 002 | Node 003 | 10G | 0 |
| Link 017 | Node 002 | Node 003 | 10G | 0 |
| Link 006 | Node 002 | Node 005 | 10G | 0.25 |
| Link 027 | Node 002 | Node 005 | 10G | 0 |
| Link 028 | Node 002 | Node 005 | 10G | 0 |
| Link 004 | Node 003 | Node 004 | 10G | 0.25 |
| Link 019 | Node 003 | Node 004 | 10G | 0 |
| Link 020 | Node 003 | Node 004 | 10G | 0 |
| Link 005 | Node 004 | Node 005 | 10G | 0.5 |

Table 5 illustrates node information after planning.

**Table 5**

| Node name | Node cross-capacity | | Total number of ports | Port usage information | |
|---|---|---|---|---|---|
| | Cross-granul arity | Number of cross-uni ts | | Port rate | Number of ports |
| Node 001 | ODUO | 8 | 8 | ODU1 | 2 |
| | | | | ODU2 | 6 |
| Node 002 | ODUO | 16 | 13 | ODU1 | 3 |
| | | | | ODU2 | 10 |
| Node 003 | ODUO | 20 | 13 | ODU1 | 3 |
| | | | | ODU2 | 10 |
| Node 004 | ODUO | 4 | 5 | ODU1 | 1 |
| | | | | ODU2 | 4 |
| Node 005 | ODUO | 8 | 5 | ODU1 | 1 |
| | | | | ODU2 | 4 |

Anti-two link interruption traversal and simulation can be performed to verify that the affected services in all link fault scenarios can be restored. Table 6 illustrates the affected services and restoration route for each link interruption combination.

**Table 6**

| Link interruption combination | Interruption service | Restoration route |
|---|---|---|
| Link 004, link 006 | Service 005 | Link 016-> link 027 |
| | Service 004 | Link 015-> link 019 |
| Link 001, link 002 | Service 001 | Link 007 |
| | Service 002 | Link 011 |
| Link 001, link 003 | Service 001 | Link 007 |
| | Service 003 | Link 015 |
| Link 002, link 003 | Service 002 | Link 011 |
| | Service 003 | Link 015 |
| Link 001, link 004 | Service 005 | Link 015-> link 027 |
| | Service 001 | Link 007 |
| Link 003, link 004 | Service 005 | Link 016-> link 027 |
| | Service 003 | Link 015 |
| Link 003, link 005 | Service 004 | Link 016-> link 004 |
| | Service 003 | Link 015 |
| | Service 005 | Link 017-> link 006 |
| Link 001, link 005 | Service 005 | Link 016-> link 006 |
| | Service 001 | Link 007 |
| | Service 004 | Link 015-> link 004 |
| Link 001, link 006 | Service 004 | Link 0 15 -> link 019 |
| | Service 001 | Link 007 |
| Link 005, link 006 | Service 004 | Link 015-> link 004 |
| | Service 005 | Link 016-> link 027 |
| Link 003, link 006 | Service 004 | Link 016-> link 019 |
| | Service 003 | Link 015 |
| Link 004, link 005 | Service 005 | Link 016-> link 006 |
| | Service 004 | Link 015-> link 019 |
| Link 002, link 005 | Service 004 | Link 015-> link 004 |
| | Service 002 | Link 011 |
| | Service 005 | Link 016-> link 006 |
| Link 002, link 006 | Service 002 | Link 011 |
| | Service 004 | Link 015-> link 019 |
| Link 002, link 004 | Service 002 | Link 011 |
| | Service 005 | Link 015-> link 027 |

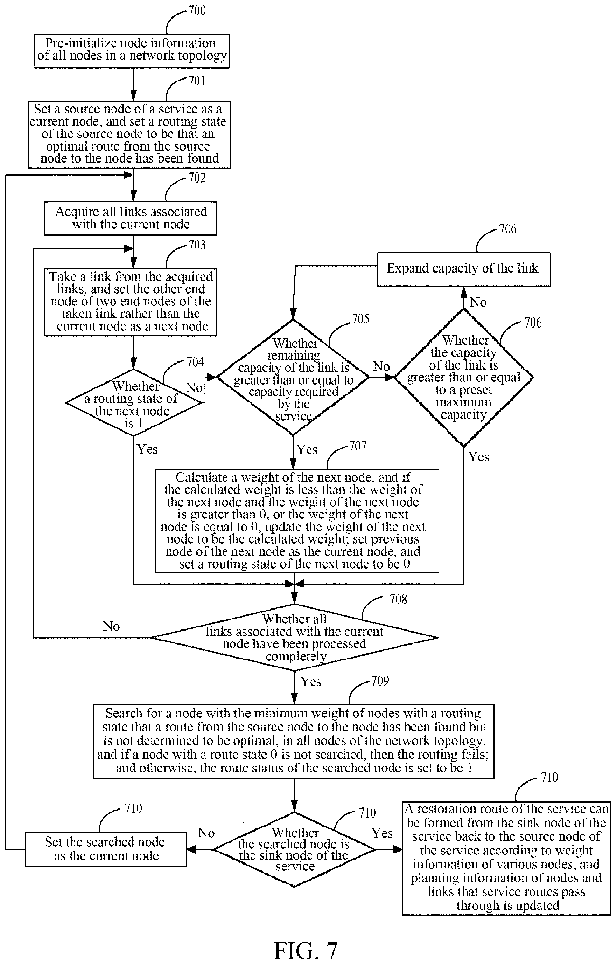

In the second example, referring to FIG. 7, a method for searching for a restoration route includes the following steps 700-710.

In step 700, the node information of all nodes in the network topology is pre-initialized.

In step 701, a source node of the service is set as the current node and a routing state of the source node is set to be 1.

In this step, 1 refers to as that an optimal route from the source node to the node has been found.

In step 702, all links associated with the current node are acquired.

In step 703, a link is taken from the acquired links, and the other end node of two end nodes of the taken link rather than the current node is set as a next node.

In step 704, whether the routing state of the next node is 1 is checked, and if yes, step 708 is executed, and if no, step 705 is executed.

In step 705, whether remaining capacity of the link is greater than or equal to the capacity required by the service is checked, and if yes, step 707 is executed, and if no, step 706 is executed.

In step 706, whether the capacity of the link is greater than or equal to a preset maximum capacity is checked, and if yes, step 708 is executed, and if no, the link capacity is expanded and step 705 is continued to be executed.

In this step, the expanded link capacity should be less than or equal to the maximum capacity when the link capacity is expanded.

In step 707, a weight of the next node is calculated; and if the calculated weight is less than the weight of the next node and the weight of the next node is greater than 0, or the weight of the next node is equal to 0, the weight of the next node is updated to the calculated weight; and a previous node of the next node is set as the current node, and the routing state of the next node is set to be 0.

In this step, 0 indicates that the route from the source node to the node has been found but is not determined to be optimal.

In step 708, it is determined whether all the links associated with the current node have been processed completely, and the step turns to step 703 to execute if there is a unprocessed link.

In step 709, a node with the minimum weight is searched for in nodes with a routing state that the route from the source node to the node has been found but is not determined to be optimal, in all the nodes in the network topology; and if the node with the route state 0 is not searched for, then the routing fails; and if the node with the route state 0 is searched for, then the route status of the searched node is set to be 1.

In step 710, it is determined whether the searched node is a sink node of the service; if the searched node is not the sink node of the service, the searched node is set as the current node and step 802 is executed; and if the searched node is the sink node of the service, the restoration route of the service from the sink node of the service back to the sourcing node of the service is formed according to weight information of each node, and planning information of nodes and links that the service route passes through is updated.

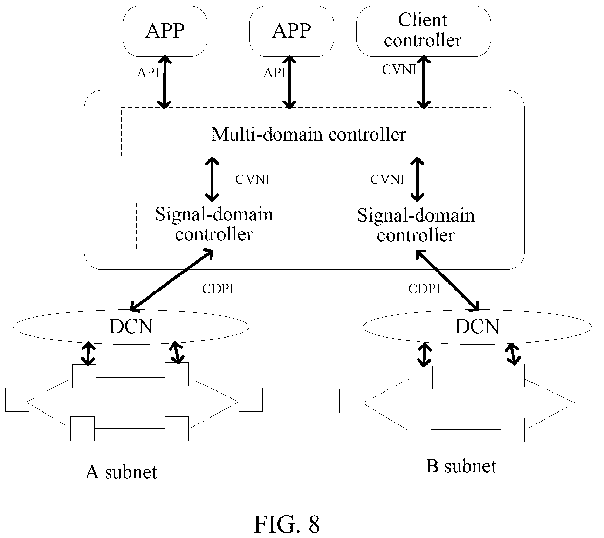

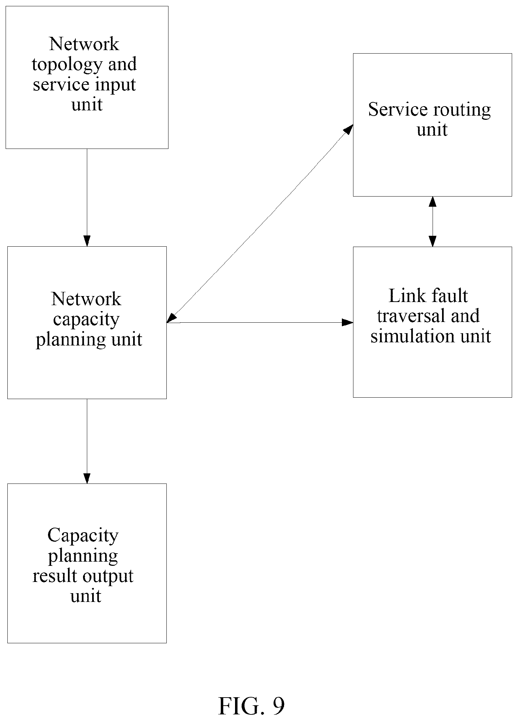

In the third example, FIG. 8 is a schematic diagram of a software defined optical network structure. As shown in FIG. 9, the software definition optical network implements end-to-end connection control and management in a scenario of across-manufactures and multi-domain networking by using a hierarchical controller architecture, including a variety of applications (APPs), multi-domain controller, single-domain controller and node equipment, and an architecture diagram is as shown in FIG. 1. Control virtual network interfaces (CVNIs) are used between the multi-domain controller and the upper APP, and between the multi-domain controllers, and between the multi-domain controller and the single-domain controller. An RESTful interface is generally used. The CVNI is one of application program programming interfaces (APIs). A control data plane interface (CDPI) is used between the single domain controller and the lower node device. Generally, an open flow (OpenFlow) protocol is used. The device that implements capacity planning in the software defined optical network may be implemented as an upper APP to query the network topology and service information from the multi-domain controller through the CVNI. A user may upgrade the existing network device according to the capacity planning result output by the APP. Then, the single domain controller re-reports new topology information to the multi-domain controller, and the multi-domain controller re-establishes services to implement optimization of the existing network such that the existing network meets an anti-multiple link interruption requirement.

In the fourth example, FIG. 9 is a structural block diagram of a device for implementing capacity planning. The entire network system as shown in FIG. 9 includes a capacity planning APP, a multi-domain controller, a single-domain controller and a device node. RESTful interfaces are used between the capacity planning APP and the multi-domain controller and between the multi-domain controller and single-domain controller for communication, and an OpenFlow protocol is used between the single-domain controller and the device node for communication.

The capacity planning APP is responsible for querying network topology and service information from the multi-domain controller, performing capacity planning, verifying a capacity planning result, and outputting the capacity planning result. The capacity planning APP includes the following working units, as shown in FIG. 9.

A network topology and service input unit is configured to query the network topology and service information from the multi-domain controller by using the RESTful interface, which has been defined in the Optical Interconnection Forum (OIF) standard.

A network capacity planning unit is configured to perform anti-multiple link interruption capacity planning based on the network topology and service information and other user restrictive conditions (e.g., restrictive conditions on cost, the number of hops, distance, etc.)

A link fault traversal and simulation unit is configured to verify the capacity planning result of the network, and traverse and simulate all services in each link interruption scenario to determine whether a restoration route can be found.

A capacity planning result output unit is configured to output the capacity planning result of the network to the user in a report output or topological graph presentation manner.

A service routing unit is configured to search for the restoration route for the service during the process of network capacity planning and link fault traversal and simulation.

Those ordinarily skilled in the art can understand that all or some of the steps of the abovementioned embodiments may be implemented by using a computer program process, the computer program may be stored in a computer-readable storage medium and the computer program may be executed on an appropriate hardware platform (such as a system, equipment, device, component, and so on), and during the execution, it includes one of the steps of the method embodiment or a combination thereof.

In an exemplary embodiment, all or some of the steps of the abovementioned embodiments can also be implemented with integrated circuits, these steps may be made into individual integrated circuit modules respectively, or some of the modules or steps can be made into a single integrated circuit module to implement.

Various devices/functional modules/functional units in the abovementioned embodiments may be implemented with universal computing devices, and they can be concentrated on a single computing device or distributed on a network composed of a plurality of computing devices.

When various devices/functional modules/functional units in the abovementioned embodiments are implemented in the form of software functional module and sold or used as an individual product, they may be stored in a computer readable storage medium. The abovementioned computer-readable storage medium may be a read-only memory, magnetic or optical disk, and the like.

### Industrial Applicability

Through the scheme of embodiments of the present invention, after the number of links between every two nodes in the network topology is increased to the preset maximum number, capacity planning is performed, thereby improving the success rate of the capacity planning. The capacity of the link is dynamically expanded according to service requirements during searching for the restoration route, thus the efficiency of a method for searching for the restoration route is improved such that the capacity planning results are more optimized. A weight of a newly added link is set to be larger than a weight of the link in the original network topology during searching for the restoration route such that the restoration route of the service does not pass through the newly added link to the greatest extent, thereby meeting requirements of anti-multiple link interruptions with less network capacity, and reducing network costs.

## Claims

1. A method for implementing capacity planning, comprising:
acquiring a current network topology and service information;
increasing a number of links between every two nodes in the acquired network topology to a preset maximum number;
traversing all link fault combinations in a network, for each of the all link fault combinations, calculating services affected by the link fault combination according to the acquired service information, and searching for a restoration route for each of the calculated affected services; and
after deleting all added and unused links in the network topology, acquiring a capacity planning result based on a network topology after deleting.

2. The method according to claim 1, wherein the searching for a restoration route for each of the calculated affected services comprises:
pre-initializing node information of all nodes in the network topology;
setting a source node of the service as a current node, and setting a routing state of the source node to be that an optimal route from the source node to the node has been found;
acquiring all links associated with the current node;
for each of the acquired links, setting other end node of two end nodes of the link rather than a current node as a next node, determining that a routing state of the next node is that an optimal route from the source node to the node has been found, and setting other end node of two end nodes of an unprocessed link rather than a current node as a next node till all the acquired links are processed completely; and
searching for a node with a minimum weight of nodes with a routing state that a route from the source node to the node has been found but is not determined to be optimal, in all the nodes of the network topology, and determining that the searched node is a sink node of a service, and forming a restoration route of the service from the sink node of the service back to the sourcing node of the service.

3. The method according to claim 2, wherein when determining that a routing state of the next node is not that an optimal route from the source node to the node has been found, the searching for a restoration route for each of the calculated affected services further comprises:
determining that remaining capacity of the link is greater than or equal to capacity required by the service, and calculating a weight of the next node;
determining that the calculated weight is less than a weight of the next node and the weight of the next node is greater than 0, or the weight of the next node is equal to 0, updating the weight of the next node to be the calculated weight, setting a previous node of the next node as a current node, and setting the routing state of the next node to be that a route from the source node to the node has been fond but is not determined to be optimal; and
continuing to perform the step of setting other end node of two end nodes of an unprocessed link rather than a current node as a next node.

4. The method according to claim 3, wherein when determining that the remaining capacity of the link is less than the capacity required by the service, the searching for a restoration route for each of the calculated affected services further comprises:
determining that capacity of the link is greater than or equal to a preset maximum capacity, and continuing to perform the step of setting other end node of two end nodes of an unprocessed link rather than a current node as a next node.

5. The method according to claim 4, wherein when determining that the capacity of the link is less than the preset maximum capacity, the searching for a restoration route for each of the calculated affected services further comprises:
expanding the capacity of the link such that the expanded capacity of the link is less than or equal to the preset maximum capacity, and performing a step of determining whether the remaining capacity of the link is greater than or equal to the capacity required by the service.

6. The method according to claim 2, wherein when determining that the searched node is not the sink node of the service, the searching for a restoration route for each of the calculated affected services further comprises:
setting the searched node as a current node, and continuing to perform the step of acquiring all the links associated with the current node.

7. A device for implementing capacity planning, comprising:
an acquisition module configured to acquire a current network topology and service information;
a planning module configured to increase a number of links between every two nodes in the acquired network topology to a preset maximum number; traverse all link fault combinations in a network, and for each of the link fault combinations, calculate services affected by the link fault combination according to the acquired service information, and search for a restoration route for each of the calculated affected services; and
an output module configured to, after all added and unused links in the network topology are deleted, acquire a capacity planning result based on a network topology after deleting.

8. The device according to claim 7, wherein the planning module is further configured to,
increase the number of links between every two nodes in the acquired network topology to the preset maximum number; traverse all link fault combinations in the network, and for each of the link fault combinations, calculate the services affected by the link fault combination according to the acquired service information;
for each of the services affected by the link fault combination, pre-initialize node information of all nodes in the network topology;
set a source node of the service as a current node, and set a routing state of the source node to be that an optimal route from the source node to the node has been found;
acquire all links associated with the current node;
for each of the acquired links, set other end node of two end nodes of the link rather than a current node as a next node, determine that a routing state of the next node is that an optimal route from the source node to the node has been found, and set other end node of two end nodes of an unprocessed link rather than a current node as a next node till all acquired links are processed completely; and
search for a node with a minimum weight of nodes with a routing state that a route from the source node to the node has been found but is not determined to be optimal, in all the nodes of the network topology, and determine that the searched node is a sink node of the service, and form a restoration route of the service from the sink node of the service back to the sourcing node of the service.

9. The device according to claim 8, wherein the planning module is configured to,
when determining that the routing state of the next node is not that the optimal route from the source node to the node has been found, determine that remaining capacity of the link is greater than or equal to capacity required by the service and calculate a weight of the next node;
when the calculated weight is less than a weight of the next node and the weight of the next node is greater than 0, or the weight of the next node is equal to 0, update the weight of the next node to be the calculated weight, set a previous node of the next node as a current node, and set a routing state of the next node to be that the route from the source node to the node has been fond but is not determined to be optimal; and
continue to perform the step of setting other end node of two end nodes of an unprocessed link rather than a current node as a next node.

10. The device according to claim 9, wherein the planning module is further configured to,
when the remaining capacity of the link is less than the capacity required by the service, determine that the capacity of the link is greater than or equal to a preset maximum capacity, and continue to perform the step of setting other end node of two end nodes of an unprocessed link rather than a current node as a next node.

11. The device according to claim 10, wherein the planning module is further configured to,
when the capacity of the link is less than the preset maximum capacity, expand the capacity of the link such that the expanded capacity of the link is less than or equal to the preset maximum capacity, and perform a step of determining whether the remaining capacity of the link is greater than or equal to the capacity required by the service.

12. The device according to claim 9, wherein the planning module is further configured to,
when the searched node is not the sink node of the service, set the searched node as a current node, and continue to perform the step of acquiring all the links associated with the current node.
